## Europäisches Patentamt
## European Patent Office
## Office européen des brevets

(19)

(11) Numéro de publication: **0 167 456**
**B1**

(12)

# FASCICULE DE BREVET EUROPEEN

(45) Date de publication du fascicule du brevet:
**26.10.88**

(51) Int. Cl.⁴: **F 16 H 3/66**

(21) Numéro de dépôt: **85401329.9**

(22) Date de dépôt: **01.07.85**

(54) Transmission, notamment pour véhicules automobiles, à grande amplitude de couple et de vitesse.

(30) Priorité: **02.07.84 FR 8410455**

(43) Date de publication de la demande:
**08.01.86 Bulletin 86/2**

(45) Mention de la délivrance du brevet:
**26.10.88 Bulletin 88/43**

(84) Etats contractants désignés:
**DE FR GB IT**

(56) Documents cités:
**EP - A - 0 036 656**
**DE - C - 875 924**
**FR - A - 1 574 726**
**FR - A - 1 579 317**
**FR - A - 2 110 072**
**FR - A - 2 370 199**
**FR - A - 2 486 186**
**US - A - 3 505 905**

(73) Titulaire: **VALEO, 64 Avenue de la Grande Armée,
F-75017 Paris (FR)**

(72) Inventeur: **Lepelletier, Pierre André Georges, 23, Avenue
Adrien Moisant, F-78400 Chatou (FR)**

(74) Mandataire: **CABINET BONNET-THIRION, 95 Boulevard
Beaumarchais, F-75003 Paris (FR)**

ACTORUM AG

## Description

La présente invention se rapporte à une transmission, notamment pour véhicule automobile, comportant une pré-boîte de vitesses et une boîte de vitesses disposées entre un arbre d'entrée de mouvement et un arbre de sortie de mouvement et interconnectées par un arbre intermédiaire, la pré-boîte de vitesses présentant un point mort libre où l'arbre intermédiaire est déconnecté de l'arbre d'entrée de mouvement et est libre, et une suite de rapports de marche avant où l'arbre intermédiaire est accouplé à l'arbre d'entrée de mouvement avec un rapport variable de marche avant, des moyens de commande de pré-boîte par lesquels la pré-boîte de vitesses est sélectivement mise au point mort libre ou en marche avant, avec un rapport choisi dans ladite suite de rapports, la boîte de vitesses comportant un ensemble planétaire double à quatre éléments dont un premier élément accouplé à l'arbre intermédiaire, un deuxième élément, un embrayage par lequel le deuxième élément est sélectivement accouplé à l'arbre d'entrée de mouvement ou libre, un troisième élément accouplé à l'arbre de sortie de mouvement, un quatrième élément, et un frein par lequel le quatrième élément est sélectivement immobilisé ou libre, ladite boîte de vitesses présentant trois conditions de marche avant dites respectivement lente, médiane et rapide, en sorte que: pour la condition lente, le deuxième élément est libre et le quatrième élément est immobilisé, pour la condition médiane, le deuxième élément est relié à l'arbre d'entrée de mouvement et le quatrième élément est immobilisé; et pour la condition rapide, le deuxième élément est relié à l'arbre d'entrée de mouvement et le quatrième élément est libre, de telle façon que la transmission présente trois modes de fonctionnement de marche avant: un mode lent dans lequel la pré-boîte de vitesses est en marche avant et la boîte de vitesses en condition lente; un mode médian dans lequel la pré-boîte de vitesses est au point mort libre et la boîte de vitesses est en condition médiane; et un mode rapide dans lequel la pré-boîte de vitesses est en marche avant et la boîte de vitesses est en condition rapide, une variation du rapport dans la suite de rapports de marche avant de la pré-boîte de vitesses ayant pour effet de faire varier dans le même sens le rapport du mode lent et en sens inverse le rapport du mode rapide de la transmission.

Une transmission de ce type est notamment décrite dans le brevet US-A-3 505 905 (LEPELLETIER). Une telle transmission présente un intérêt considérable pour toutes sortes de véhicules automobiles et plus spécialement pour les véhicules lourds, dans la mesure où elle permet, d'une manière remarquable, d'obtenir, en même temps: un échelonnement des rapports de vitesse avec une bonne progression procurant à la fois d'excellentes conditions d'insertion dans le trafic et une consommation de carburant économique grâce à des rapports supérieurs rapprochés; des conditions de contrôle qui sont simples dans la mesure où, pour le passage d'un rapport quelconque à un autre rapport voisin, ou même de deux en deux, il suffit d'intervenir sur au plus deux des moyens de commande de la transmission, tels qu'embrayages ou freins, et ceci avec une amplitude de couple et de vitesse en marche avant remarquablement étendue, fréquemment comprise par exemple entre 10 et 13.

Dans le brevet US-A-3 505 905 (LEPELLETIER), on a prévu de donner à la transmission une marche arrière multiple, en dotant la boîte de vitesses d'un moyen de contrôle spécial propre à lui donner une condition de marche arrière.

Un tel agencement a, sans doute, l'avantage de donner à la transmission une marche arrière multiple sous la forme d'une suite de rapports exactement proportionnels aux rapports correspondants de marche avant.

Mais l'expérience a montré qu'une telle multiplicité donnée à la marche arrière ne présente généralement d'avantages que dans certaines applications spéciales et que de plus dans les applications courantes, les rapports ainsi obtenus se trouvent généralement allongés de 20 à 40%. Il est alors nécessaire, pour maintenir l'aptitude maximale en côte ou l'effort au crochet maximal du véhicule en marche arrière, de raccourcir d'autant la démultiplication finale.

On est ainsi contraint de ne plus utiliser qu'une partie de l'amplitude de couple et de vitesse remarquablement étendue réalisée en marche avant, alors qu'il est essentiel pour bénéficier des meilleures performances, que cette amplitude puisse conserver intégralement sa pleine valeur.

La présente invention a pour objet une transmission, notamment pour véhicule automobile, du type indiqué ci-dessus, qui bénéficie d'une telle condition désirable, avec une amplitude encore accrue de couple et de vitesse en marche avant, tout en offrant un étagement des rapports de vitesse en marche avant extrêmement favorable, une très bonne marche arrière, et des conditions de commande particulièrement simples, avec un excellent rendement.

Suivant l'invention, une transmission, notamment pour véhicule automobile, du type sus-indiqué, est caractérisée en ce que la pré-boîte de vitesses présente un rapport arrière, en sorte que la transmission présente d'une part, une marche arrière lorsque la boîte de vitesses est en condition lente et, d'autre part, un rapport culminant de marche avant lorsque la boîte de vitesses est en condition rapide.

Ainsi, suivant cet agencement, la marche arrière est obtenue, non plus par la boîte de vitesses, mais par la pré-boîte de vitesses, ce qui permet de donner à la transmission, non seulement une marche arrière excellente avec une démultiplication du même ordre que celle de la première, restituant le bénéfice de la large amplitude de couple et de vitesse de la marche avant, mais également un rapport supplémentaire de marche avant, situé tout en haut des rapports de marche avant et ayant pour effet d'augmenter encore cette amplitude de couple et de vitesses de la transmission en marche avant.

Dans une forme d'exécution préférée, la pré-boîte de vitesses présente, comme dans le brevet US-A-3 505 905 (LEPELLETIER), un point mort freiné où l'arbre intermédiaire est déconnecté de l'arbre d'entrée de mouvement et est immobilisé, ce qui donne à la transmission, d'une part, un point mort freiné lorsque la boîte de vitesses est en condition lente, et, d'autre part, un rapport élevé supplémentaire de marche avant, ici appelé subculminant, lorsque la boîte de vitesses est en condition rapide.

L'avantage d'un point mort freiné est de permettre l'immobilisation du véhicule, moteur tournant, ce qui est particulièrement utile pour les véhicules lourds lors des arrêts momentanés imposés par le trafic. Les prescriptions réglementaires et les impératifs de sécurité font en effet obligation au conducteur du véhicule lourd de serrer puis de desserrer le frein d'immobilisation proprement dit lors de chaque arrêt et redémarrage du véhicule.

Le fait de disposer d'un tel point mort freiné présente ainsi l'intérêt considérable de libérer le conducteur d'une telle manœuvre particulièrement contraignante.

En outre, le fait de disposer d'un rapport subculminant de marche avant introduit, d'une manière bénéfique, un échelon intermédiaire entre, d'une part, les rapports du mode rapide et, d'autre part, le rapport culminant susvisé de marche avant, ce qui permet la réalisation d'un étagement à la fois régulier et dégressif des rapports, tout en respectant l'amplitude accrue de couple et de vitesse, favorable au fonctionnement.

Dans un mode de réalisation, l'ensemble planétaire double de la boîte de vitesses comporte un premier et un deuxième trains planétaires élémentaires de boîte, ayant chacun trois organes dont un organe planétaire, un organe couronne et un organe porte-satellites dont les satellites engrènent tant avec l'organe planétaire qu'avec l'organe couronne, le premier élément de la boîte de vitesses étant formé par le planétaire du premier train et le planétaire du deuxième train jumelés et accouplés à l'arbre intermédiaire, le deuxième élément de la boîte de vitesses étant formé par le porte-satellites du deuxième train et coopérant avec l'embrayage sus-visé, le troisième élément de la boîte de vitesses étant formé par le porte-satellites du premier train et la couronne du deuxième train jumelés et accouplés à l'arbre de sortie de mouvement, le quatrième élément de la boîte de vitesses étant formé par la couronne du premier train et coopérant avec le frein sus-visé.

Un tel agencement permet une construction robuste et un fonctionnement sans aléa, avec un excellent rendement.

Dans une forme d'exécution préférée, la pré-boîte comporte un premier et un deuxième trains planétaires élémentaires ayant chacun trois organes dont un organe planétaire, un organe couronne et un organe porte-satellites dont les satellites engrènent tant avec le planétaire qu'avec la couronne, un premier organe du premier train de pré-boîte étant seul et admis par les moyens de commande susvisés de pré-boîte à être sélectivement embrayé avec l'arbre d'entrée de mouvement, ou immobilisé, ou libre, un premier organe du deuxième train de pré-boîte étant accouplé avec l'arbre intermédiaire, les deux deuxièmes organes des deux trains de pré-boîte étant jumelés et admis par lesdits moyens de commande de pré-boîte à être sélectivement embrayés avec l'arbre d'entrée de mouvement, ou immobilisés, ou libres, tandis que les deux troisièmes organes des deux trains de pré-boîte sont jumelés et admis par lesdits moyens de commande de pré-boîte à être sélectivement immobilisés, ou libres. Ainsi la pré-boîte a une configuration qui est analogue à celle de la boîte, et l'ensemble de la boîte et de la pré-boîte est globalement constitué par quatre trains planétaires élémentaires disposés côte à côte, avec une construction robuste, un encombrement réduit, et un excellent rendement.

En outre, suivant une autre variante de l'invention, des moyens procurant une démultiplication supplémentaire sont associés à la boîte de vitesses pour donner à la transmission des rapports supplémentaires s'ajoutant aux rapports pré-existants, ce qui élargit encore considérablement l'éventail des possibilités en permettant d'utiliser optionnellement tout ou partie des rapports pré-existants et supplémentaires, et procure en tout cas, d'une manière bénéfique, une première extra-lente et une marche arrière extralente, avec des démultiplications accrues, mais restant toujours du même ordre.

Grâce à cette disposition, la transmission présente une amplitude de couple et de vitesse considérablement accrue tant en marche avant qu'en marche arrière, ce qui élargit encore son champ d'application et rend même inutile l'usage de convertisseurs hydrauliques de couple ou de dispositifs amplificateurs complémentaires, tels que relais ou ponts arrière à double démultiplication, par exemple.

Des formes d'exécution de l'invention sont ci-après décrites, à titre d'exemple, en référence aux dessins annexés dans lesquels:

la figure 1 montre schématiquement une transmission suivant l'invention avec ses moyens de commande, cette transmission ayant onze vitesses de marche avant, un point mort freiné et une marche arrière;

la figure 2 illustre les conditions d'obtention des rapports de cette transmission;

la figure 3 montre une forme de réalisation de la transmission de la figure 1;

la figure 4 est un diagramme illustrant les variations de la vitesse de sortie VS de la transmission de la figure 3, portée en abscisses en fonction de la vitesse d'entrée VE portée en ordonnées;

la figure 5 est une vue analogue à la figure 3, mais concerne une variante de réalisation;

la figure 6 est une vue analogue à la figure 1, mais concerne une autre variante dans laquelle un train planétaire démultiplicateur est associé à la boîte de vitesses pour donner à la transmission des rapports supplémentaires s'ajoutant aux rapports pré-existants, et notamment une première extra-lente et une marche arrière extra-lente;

la figure 7 montre une forme de réalisation de la transmission de la figure 6;

la figure 8 est analogue à la figure 6 mais concerne une autre variante;

les figures 9 et 10 sont des variantes respectives des figures 3 et 7;

la figure 11 est analogue aux figures 6 et 8, mais se rapporte à la variante de la figure 10.

Dans la description qui suit on appellera train simple, un train élémentaire à satellites simples, et train étagé, un train élémentaire à satellites étagés.

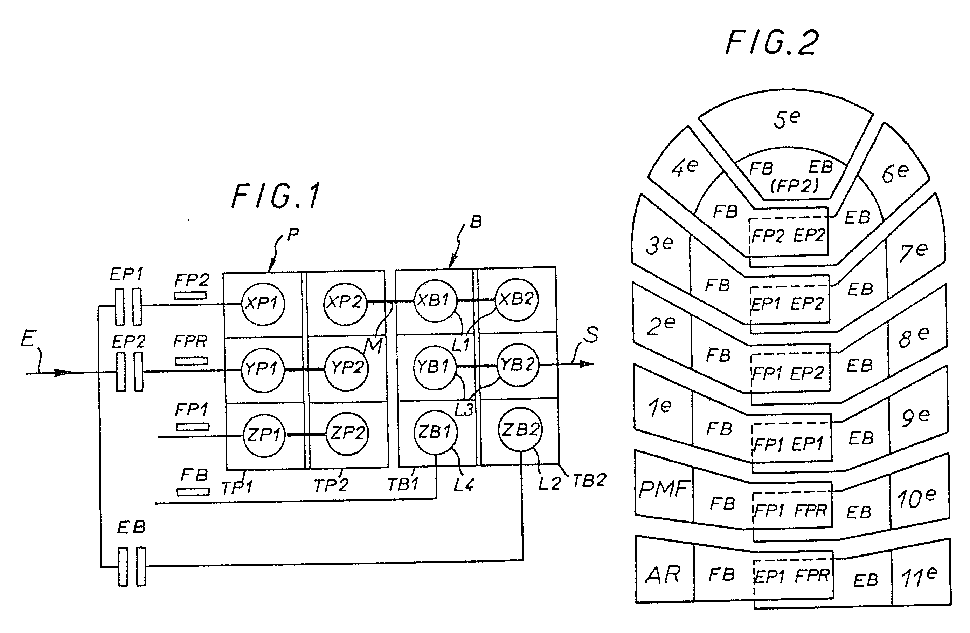

On se référera d'abord aux figures 1 à 4 qui concernent, à titre d'exemple non limitatif, une application de l'invention à une transmission pour véhicules lourds.

La transmission comporte (figure 1) une pré-boîte de vitesses P et une boîte de vitesses B, disposées entre un arbre d'entrée de mouvement E et un arbre de sortie de mouvement S. La pré-boîte de vitesses P et la boîte de vitesses B sont interconnectées par un arbre intermédiaire M.

La pré-boîte de vitesses P présente un point mort libre où l'arbre intermédiaire M est déconnecté de l'arbre d'entrée de mouvement E et est libre, et d'une part, une suite de rapports de marche avant où l'arbre intermédiaire M est accouplé à l'arbre d'entrée de mouvement E avec un rapport variable de marche avant, et d'autre part, un rapport de marche arrière où l'arbre d'entrée de mouvement E avec un rapport de marche arrière.

La pré-boîte de vitesses comporte des moyens de commande de pré-boîte EP1, EP2, FP1, FP2, FPR, par lesquels la pré-boîte de vitesses P est sélectivement mise au point mort libre, ou en marche avant avec un rapport choisi dans ladite suite de rapports, ou en marche arrière sur ledit rapport de marche arrière.

La boîte de vitesses B comporte un ensemble planétaire double à quatre éléments L1, L2, L3 et L4. Le premier élément L1 est accouplé à l'arbre intermédiaire M. Le deuxième élément L2 est associé à un embrayage EB par lequel ce deuxième élément L2 est sélectivement accouplé à l'arbre d'entrée de mouvement E ou libre. Le troisième élément L3 est accouplé à l'arbre de sortie de mouvement S. Le quatrième élément L4 est associé à un frein FB par lequel ce quatrième élément L4 est sélectivement immobilisé ou libre.

La boîte de vitesses B présente une condition avant lente, une condition avant médiane et une condition avant rapide.

La condition avant lente est obtenue lorsque le deuxième élément L2 est rendu libre par désengagement de l'embrayage EB, tandis que le quatrième élément L4 est immobilisé par engagement du frein FB.

La condition avant médiane est obtenue lorsque le deuxième élément L2 est relié à l'arbre d'entrée de mouvement E par engagement de l'embrayage EB tandis que le quatrième élément L4 est immobilisé par engagement du frein FB.

La condition avant rapide est obtenue lorsque le deuxième élément L2 est relié à l'arbre d'entrée de mouvement E par engagement de l'embrayage EB tandis que le quatrième élément L4 est rendu libre par désengagement du frein FB.

La transmission P-B présente un mode lent de marche avant, un mode médian de marche avant, et un mode rapide de marche avant.

Le mode lent de marche avant est obtenu lorsque la pré-boîte de vitesses P est en marche avant, tandis que la boîte de vitesses B est en condition avant lente.

Le mode médian de marche avant est obtenu lorsque la pré-boîte de vitesses P est au point mort libre, tandis que la boîte de vitesse B est en condition avant médiane.

Le mode rapide de marche avant est obtenu lorsque la pré-boîte de vitesses P est en condition avant, tandis que la boîte de vitesses B est en condition avant rapide.

Une variation du rapport dans la suite de rapports de marche avant de la pré-boîte de vitesses P a pour effet de faire varier dans le même sens le rapport du mode avant lent de la transmission, et, en sens inverse, le rapport du mode avant rapide de la transmission.

La pré-boîte de vitesses P présente également un point mort freiné qui est obtenu sélectivement par les moyens de commande EP1, EP2, FP1, FP2, FPR, et dans lequel l'arbre intermédiaire M est déconnecté de l'arbre d'entrée de mouvement E et est immobilisé.

Cette disposition a pour effet de donner à la transmission P-B, d'une part, un point mort freiné où l'arbre de sortie de mouvement S est immobilisé, lorsque la boîte de vitesses B est en condition lente, et, d'autre part, un rapport élevé de marche avant, désigné par rapport subculminant pour des raisons qui apparaîtront plus loin, lorsque la boîte de vitesses B est en condition rapide.

La pré-boîte de vitesses P présente également un rapport arrière qui est obtenu sélectivement par les moyens de commande de pré-boîte EP1, EP2, FP1, FP2, FPR, et qui donne à la transmission P-B, d'une part, une marche arrière lorsque la boîte de vitesses B est en condition lente, et, d'autre part, un rapport supplémentaire de marche avant, désigné par rapport culminant parce qu'il se trouve situé au-dessus du rapport subculminant, lui-même situé au dessus du mode rapide de marche avant. Ce rapport culminant de marche avant est obtenu lorsque la boîte de vitesses BV est en condition rapide.

Dans l'exemple représenté aux figures 1 à 4, la pré-boîte de vitesses P a une marche arrière, un point mort freiné et quatre rapports de marche avant.

Dans ces conditions, la transmission P-B a (figure 2) une marche arrière AR, un point mort freiné PMF et onze vitesses de marche avant désignées par première, deuxième, troisième, quatrième, cinquième, sixième, septième, huitième, neuvième, dixième et onzième.

Sur cette figure 21, on voit comment ces divers rapports sont obtenus. On a indiqué à la figure 2, les moyens de commande de pré-boîte EP1, EP2, FP1, FP2 et FPR et, également, l'embrayage EB et le frein FB de boîte. La présence des désignations de ces divers embrayages et freins à la figure 2 indique qu'ils sont engagés et leur absence qu'ils sont désengagés.

On notera que les vitesses première à quatrième en marche avant correspondent au mode lent, tandis que la cinquième en marche avant est la médiane. Les vitesses en marche avant sixième à neuvième correspondent au mode rapide de marche avant. La dixième vitesse correspond au point mort freiné et est la vitesse subculminante et la onzième vitesse correspond à la marche arrière et est la vitesse culminante. Avec ces divers rapports de marche avant échelonnés depuis la première jusqu'à la onzième, on obtient une amplitude extrêmement grande de couple et de vitesse tant en marche avant qu'en marche arrière, ce qui est favorable au fonctionnement notamment des véhicules lourds.

On voit également à la figure 2 que pour le passage d'une vitesse à la vitesse voisine, ou de deux vitesses en deux vitesses s'il y a lieu, on n'intervient jamais sur plus de deux composants de la commande. Par exemple, pour passer de la deuxième à la troisième, on voit que l'embrayage EP2 et le frein FB restent engagés, tandis que l'embrayage EP1 et le frein FP1 sont permutés, en ce qui concerne leur engagement et désengagement. Il en est de même pour tous les autres passages de vitesse, y compris à l'endroit de la médiane, c'est-à-dire de la cinquième vitesse, où il suffit par exemple de laisser le frein FP2 engagé pour ne pas avoir à permuter plus de deux composants de la commande, en l'occurrence le frein FB et l'embrayage EB. On notera que, pour la simple obtention de cette cinquième vitesse de marche avant ou médiane, il serait indifférent que le frein FP2 soit engagé ou désengagé et c'est la raison pour laquelle, à la figure 2, la désignation FP2 est mise entre parenthèses.

Dans l'exemple représenté aux figures 1 à 4, l'ensemble planétaire double de la boîte de vitesses B comporte un premier et un deuxième trains planétaires élémentaires de boîte TB1 et TB2.

Chaque train planétaire élémentaire de boîte TB1 ou TB2 a trois organes généralement désignés par X, Y et Z, dont un organe planétaire 10, un organe couronne 11 et un organe porte-satellites 12 dont les satellites 13 engrènent tant avec l'organe planétaire 10 qu'avec l'organe couronne 11.

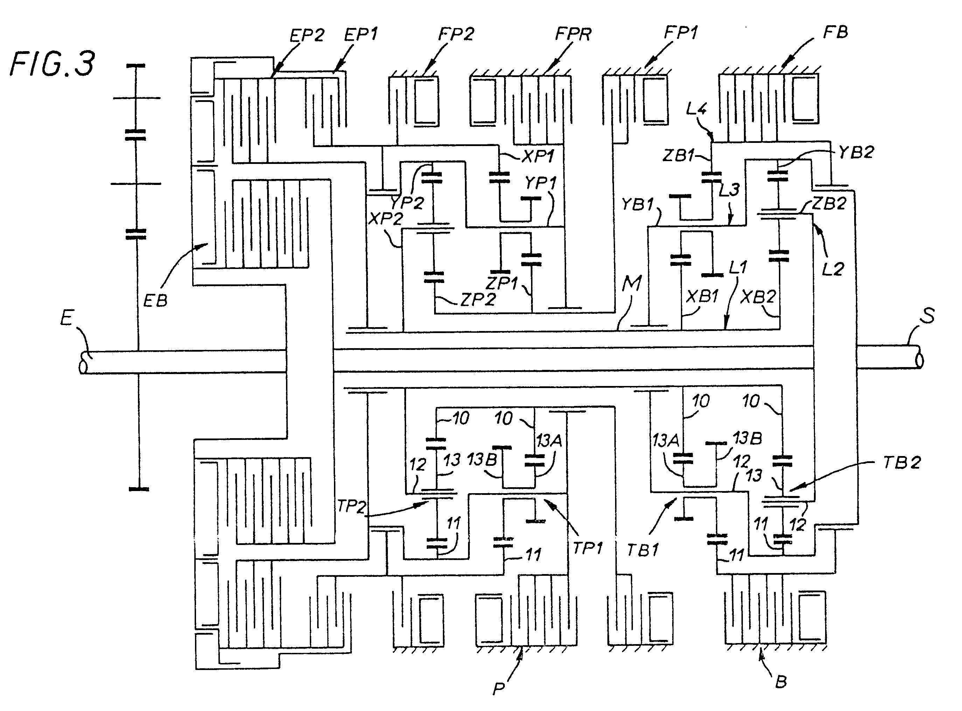

Il est à noter que les satellites peuvent être soit simples et sont alors désignés par 13, soit étagés et sont alors désignés par 13A et 13B, comme on le voit à la figure 3. Ces satellites 13A et 13B sont solidaires l'un de l'autre et ont des nombres de dents et/ou des diamètres différents. L'un d'eux engrène avec un planétaire et l'autre avec une couronne.

Le premier élément L1 de la boîte de vitesses B est formé par un premier organe XB1 du premier train TB1 et un premier organe XB2 du deuxième train TB2 jumelés et accouplés à l'arbre intermédiaire M.

Les organes XB1 et XB2 sont tous les deux des planétaires 10.

Le deuxième élément L2 de la boîte de vitesses B est formé par un deuxième organe ZB2 du deuxième train de boîte TB2. Ce deuxième élément L2 est seul et coopère avec l'embrayage EB.

L'organe ZB2 est un porte-satellites 12.

Le troisième élément L3 de la boîte de vitesses B est formé par un deuxième organe YB1 de premier train TB1 et le troisième organe YB2 du deuxième train TB2, jumelés et accouplés à l'arbre de sortie de mouvement S.

L'organe YB1 est un porte-satellites 12, tandis que l'organe YB2 est une couronne 11.

Le quatrième élément L4 de la boîte de vitesses B est formé par le troisième organe ZB1 du premier train de boîte TB1. Ce quatrième élément L4 est seul et coopère avec le train FB.

L'organe ZB1 est formé par une couronne 11.

Dans l'exemple représenté aux figures 1 à 4, la pré-boîte P comporte un premier train planétaire élémentaire de pré-boîte TP1 et un deuxième train planétaire élémentaire de pré-boîte TP2.

Chaque train planétaire élémentaire de pré-boîte a trois organes X, Y, Z dont un organe planétaire 10, un organe couronne 11, et un organe porte-satellites 12, dont les satellites 13 engrènent tant avec l'organe planétaire 10 qu'avec l'organe couronne 11. Les satellites peuvent être simples et sont désignés par 13 ou encore étagés et sont composés de deux satellites 13A et 13B. Ces satellites 13A et 13B sont solidaires l'un de l'autre et ont des nombres de dents et/ou des diamètres différents. L'un d'eux engrène avec un organe planétaire et l'autre avec un organe couronne.

Un premier organe XP1 du premier train de pré-boîte TP1 est seul et coopère avec l'embrayage EP1 et le frein FP2. L'organe XP1 est ainsi admis, par le jeu de l'embrayage EP1 et du frein FP2, à être sélectivement embrayé avec l'arbre d'entrée de mouvement E, ou immobilisé, ou libre.

Dans l'exemple de la figure 3, l'organe XP1 est un organe couronne 11.

Un premier organe XP2 du deuxième train de pré-boîte TP2 est accouplé avec l'arbre intermédiaire M.

L'organe XP2 est un organe porte-satellites 12.

Les deux deuxièmes organes YP1 et YP2 des deux trains de pré-boîte TP1 et TP2 sont jumelés et coopèrent avec l'embrayage EP2 et le frein FPR.

L'ensemble YP1 et YP2 est ainsi admis, par le jeu de l'embrayage EP2 et du frein FPR, à être sélectivement embrayé avec l'arbre d'entrée de mouvement E, ou immobilisé, ou libre.

L'organe YP1 est un organe porte-satellites 12, tandis que l'organe YP2 est un organe couronne 11.

Les deux troisièmes organes ZP1 et ZP2 des deux trains de pré-boîte TP1 et TP2 sont jumelés et coopèrent avec le frein FP1. Ainsi, cet ensemble est admis, par le jeu du frein FP1, à être sélectivement immobilisé, ou libre.

Les organes ZP1 et ZP2 sont des planétaires 10.

On notera aux figures 1 et 3, que les trains planétaires élémentaires TP1, TP2, TB1 et TB2 de la pré-boîte P et de la boîte B sont tous les quatre placés les uns à côté des autres dans l'ordre deuxième train de pré-boîte TP2, premier train de pré-boîte TP1, premier train de boîte TB1 et deuxième train de boîte TB2. Ces divers trains ont une construction analogue qui est particulièrement robuste. L'ensemble de ces trains présente un encombrement réduit et un excellent rendement.

Dans l'exemple non limitatif représenté à la figure 3, les satellites du train TP1 sont étagés et comportent un satellite 13A engrenant avec le planétaire 10 et un satellite 13B engrenant avec la couronne 11. Les satellites du train TP2 sont simples et désignés par 13 et engrènent tant avec le planétaire 10 qu'avec la couronne 11. Les satellites du train TB1 sont étagés et comportent des satellites 13A engrenant avec le planétaire 10 et des satellites 13B engrenant avec la couronne 11, tandis que les satellites du train TB2 sont simples et désignés par 13 et engrènent tant avec le planétaire 10 qu'avec la couronne 11. Dans l'exemple représenté à la figure 3, les nombres de dents sont les suivants:
- Premier train de pré-boîte TP1
    - planétaire 10 (XP1):        47
    - satellites 13A (de YP1):    16
    - satellites 13B (de YP1):    24
    - couronne 11 (ZP1):          81
- Deuxième train de pré-boîte TP2
    - planétaire 10 (ZP2):        33
    - satellites 13 (de YP2):     24
    - couronne 11 (YP2):          81

– Premier train de boîte TB1

| | | |
|---|---|---:|
| | – planétaire 10 (XB1): | 48 |
| | – satellites 13A (de YB1): | 18 |
| | – satellites 13B (de YB1): | 25 |
| | – couronne 11 (ZB1): | 89 |

– Deuxième train de boîte TB2

| | | |
|---|---|---:|
| | – planétaire 10 (XB2): | 46 |
| | – satellites 13 (de ZB2): | 21 |
| | – couronne 11 (YB2): | 89 |

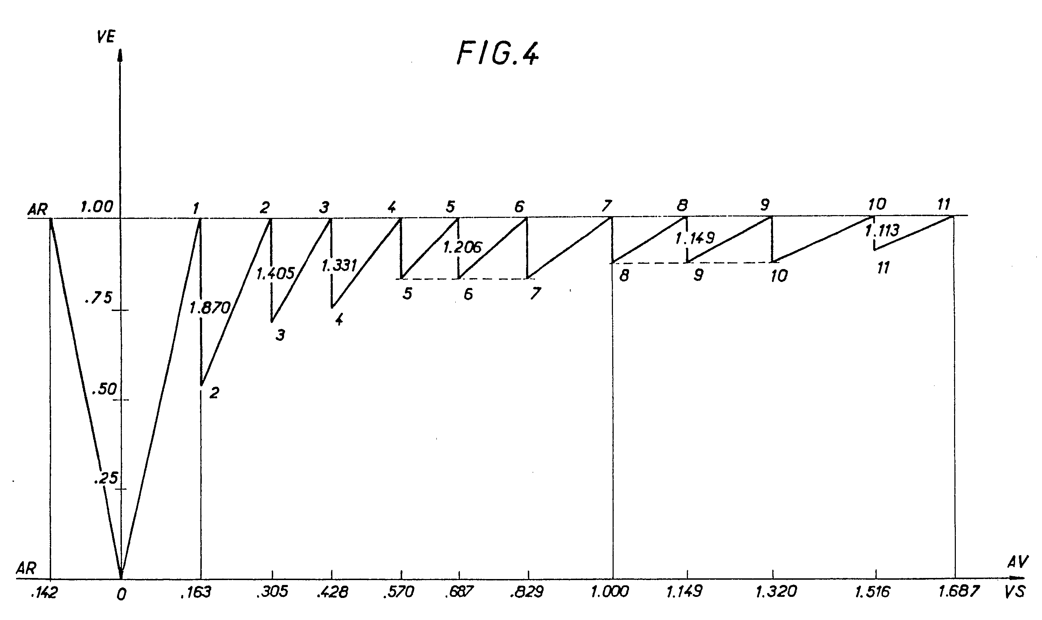

Avec une telle disposition, et ainsi qu'on le voit sur le diagramme de la figure 4, on réalise une remarquable progression des rapports.

Ces rapports son les suivants:

| | |
|---|---:|
| Marche arrière: | 0,142 |
| Première avant: | 0,163 |
| Deuxième avant: | 0,305 |
| Troisième avant: | 0,428 |
| Quatrième avant: | 0,570 |
| Cinquième avant (médiane): | 0,687 |
| Sixième avant: | 0,829 |
| Septième avant (prise directe): | 1,000 |
| Huitième avant: | 1,149 |
| Neuvième avant: | 1,320 |
| Dixième avant (vitesse subculminante): | 1,516 |
| Onzième avant (vitesse culminante): | 1,687 |

On appréciera que l'amplitude de couple et de vitesse est très importante puisqu'elle atteint 10,35 en marche avant et 11,90 en marche arrière, ce qui est particulièrement favorable au fonctionnement du véhicule notamment poids lourds.

Les sauts entre les rapports, ainsi qu'il apparaît sur le diagramme de la figure 4 obéissent à une non moins remarquable progression qui est la suivante:

| entre la | 1ère | avant et la | 2ème | avant: | 1,870 |
|---|---|---|---|---|---:|
| » | 2ème | » » | 3ème | » : | 1,405 |
| » | 3ème | » » | 4ème | » : | 1,331 |
| » | 4ème | » » | 5ème | » : | 1,206 |
| » | 5ème | » » | 6ème | » : | 1,206 |
| » | 6ème | » » | 7ème | » : | 1,206 |
| » | 7ème | » » | 8ème | » : | 1,149 |
| » | 8ème | » » | 9ème | » : | 1,149 |
| » | 9ème | » » | 10ème | » : | 1,149 |
| » | 10ème | » » | 11ème | » : | 1,113 |

On notera également que l'agencement suivant l'invention permet de réaliser des gammes telles que celle représentée à la figure 4 mais aussi toutes autres sortes de gammes largement diversifiées, en particulier des gammes entièrement arithmétiques, ou des gammes géométriques incorporant des sauts dans l'échelonnement des rapports se présentant par paliers successifs, et d'une façon générale des échelonnements pouvant facilement être adaptés, en fonction des applications.

On appréciera à la figure 3, que dans la transmission suivant l'invention, l'arbre d'entrée de mouvement E, la pré-boîte de vitesses P, l'arbre intermédiaire M, la boîte de vitesses B, et l'arbre de sortie de mouvement S sont coaxiaux. On appréciera également que la septième vitesse est alors en prise directe.

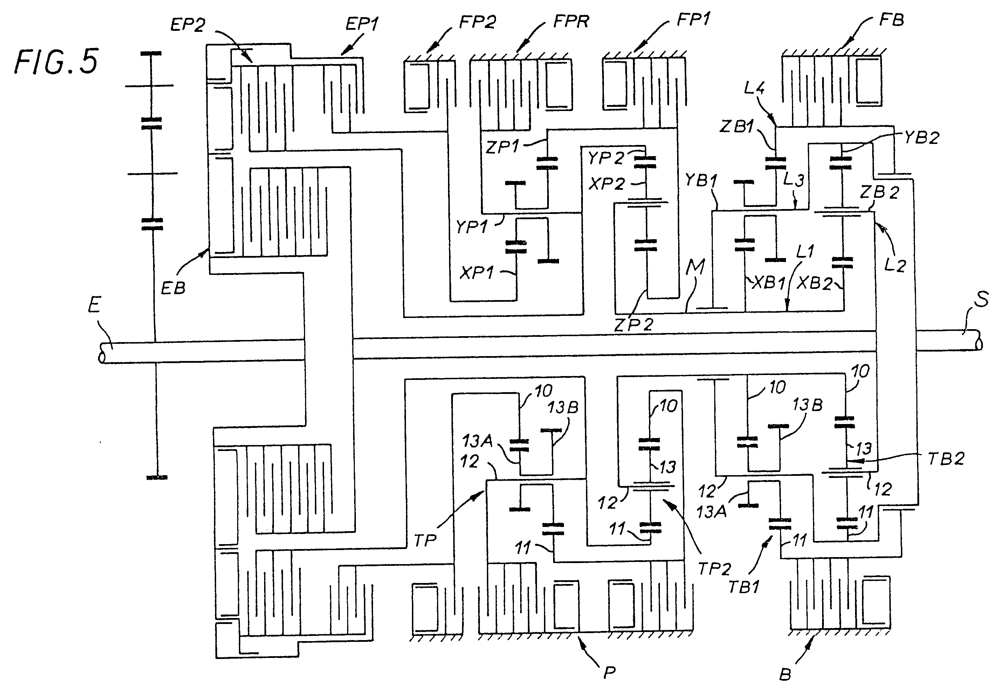

En variante (figure 5), la disposition est analogue à celle qui vient d'être décrite en référence aux figures 1 à 4, mais le premier organe XP1 du premier train de pré-boîte TP1 est un organe planétaire 10, le premier organe XP2 du deuxième train de pré-boîte TP2 est un organe porte-satellites 12, le deuxième organe YP1 du premier train de pré-boîte TP1 est un organe porte-satellites 12, le deuxième organe YP2 du deuxième train de pré-boîte TP2 est un organe couronne 11, le troisième organe ZP1 du premier train de pré-boîte TP1 est un organe couronne 11, et le troisième organe ZP2 du deuxième train de pré-boîte TP2 est un organe planétaire 10.

Avec un tel agencement, on obtient également d'excellentes conditions de construction et de fonctionnement.

On notera qu'à la figure 5, les trains planétaires élémentaires de la pré-boîte P et de la boîte B sont tous les quatre placés les uns à côté des autres, dans l'ordre, premier train de pré-boîte TP1, deuxième train de pré-boîte TP2, premier train de boîte TB1 et deuxième train de boîte TB2.

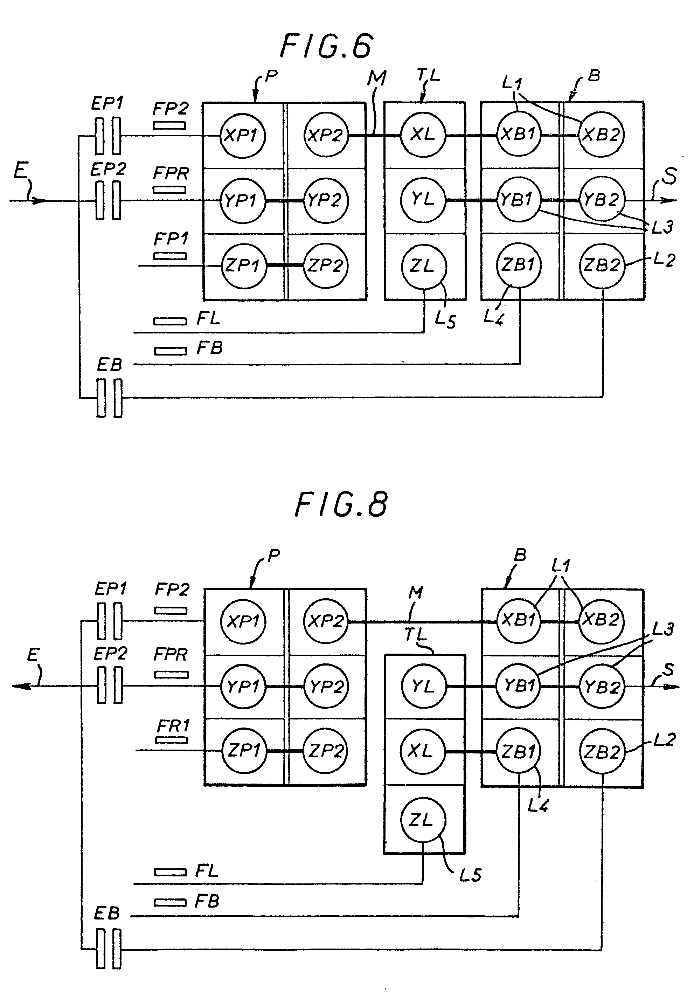

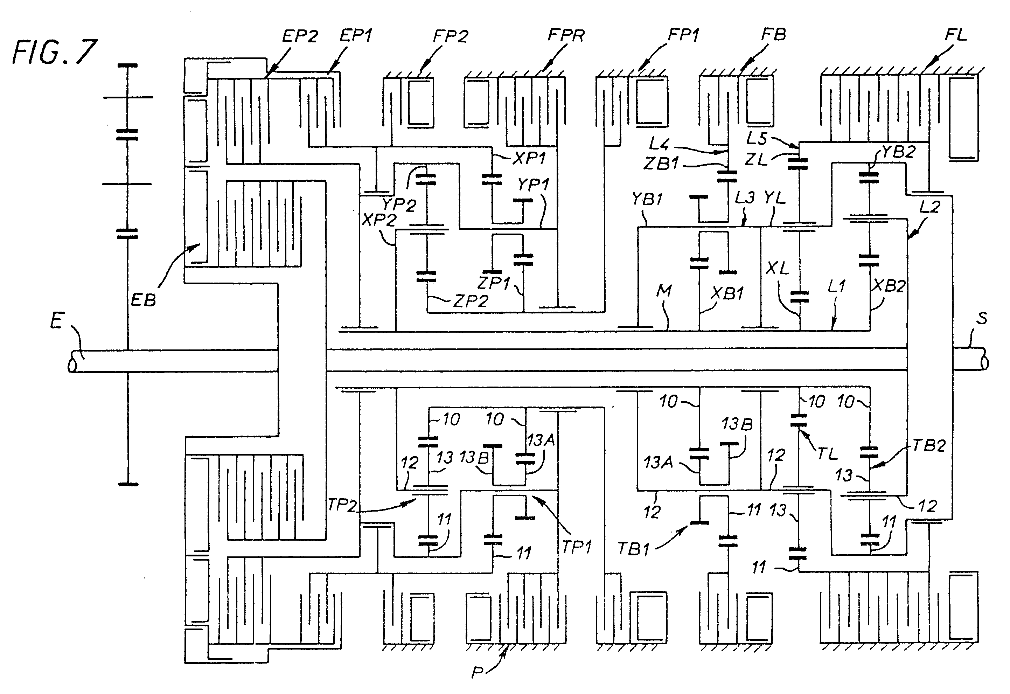

Dans une autre variante (figures 6 et 7), la disposition est analogue à celles qui ont été décrites précédemment, mais un train planétaire de démultiplication TL est associé à la boîte de vitesses B pour donner à la transmission des rapports supplémentaires tant en marche avant qu'en marche arrière.

Plus particulièrement dans la transmission des figures 6 et 7, la disposition comporte identiquement la même pré-boîte de vitesses P, tandis que la boîte de vitesses comporte le même ensemble planétaire double à quatre éléments L1, L2, L3, L4 augmenté d'un train élémentaire à trois éléments TL de manière à constituer un nouvel ensemble triple à cinq éléments L1, L2, L3, L4, L5, et un frein FL par lequel le cinquième élément L5 de ce nouvel ensemble est sélectivement immobilisé ou libre. Plus particulièrement, le train élémentaire TL comporte un planétaire XL jumelé avec XP2, XB1 et XB2, un porte-satellites YL jumelé avec YB1 et YB2, et une couronne ZL constituant le cinquième élément coopérant à volonté avec le frein FL.

La boîte de vitesses présente ainsi une quatrième condition de marche avant, ditre extra-lente en ce sens qu'elle est choisie démultipliée par rapport à la condition lente, de sorte que la transmission présente, d'une part, un quatrième mode de fonctionnement de marche avant, dit extra-lent, dans lequel la pré-boîte de vitesses P est en marche avant et la boîte de vitesses B en condition extra-lente, et d'autre part une deuxième marche arrière dans laquelle la pré-boîte de vitesses P est en marche arrière et la boîte de vitesses B en condition extra-lente.

Dans ces conditions, la transmission P-B présente les rapports supplémentaires suivants: une sous-marche arrière ou marche arrière extra-lente LAR, un deuxième point mort freiné PMFL obtenu en serrant le frein FL au lieu du frein FB, une sous-première ou première extra-lente L1ère, une sous-deuxième L2ème, une sous-troisième L3ème et une sous-quatrième L4ème, soit en tout deux vitesses arrière, deux points morts freinés, et quinze vitesses avant.

Dans un mode de réalisation (figure 7) le rapport entre les modes lent et extra-lent est choisi de préférence intermédiaire entre les sauts 1ère/2ème et 2ème/3ème pré-existants. Avantageusement les rapports de 1ère, de sous-3ème et sous-4ème sont délaissés et la transmission est exploitée selon une gamme à douze vitesses avant et deux vitesses arrière parfaitement échelonnée.

Dans l'exemple représenté à la figure 7, le train planétaire de démultiplication TL est logé entre le premier train de boîte TB1 et le deuxième train de boîte TB2. Le premier organe XL du train TL est un planétaire 10 ayant 32 dents. Le deuxième organe YL du train TL est un porte-satellites 12 dont les satellites 13 ont chacun 31 dents. Le troisième organe ZL du train TL est une couronne 11 ayant 94 dents.

Dans ces conditions, et avec des nombres de dents identiques, tels que par exemple décrits en référence à la figure 3 pour les divers organes de la pré-boîte P et de la boîte B, les rapports et les sauts entre les rapports sont les suivants:

| | | |
|---|---|---|
| Marche arrière extra-lente LAR | 0,084 | ) 1,686* |
| Marche arrière normale | 0,142 | |

| | | |
|---|---|---|
| Première extra-lente L1ère: | 0,097 | ) 1,870 |
| Sous-deuxième L2ème: | 0,181 | ) 1,686* |
| Deuxième normale: | 0,305 | ) 1,405 |
| Troisième normale: | 0,428 | ) 1,331 |
| Quatrième normale: | 0,570 | ) 1,206 |
| Cinquième normale (médiane): | 0,687 | ) 1,206 |
| Sixième normale: | 0,829 | ) 1,206 |
| Septième normale (prise directe): | 1,000 | ) 1,149 |
| Huitième normale: | 1,149 | ) 1,149 |
| Neuvième normale: | 1,320 | ) 1,149 |
| Dixième normale (vitesse subculminante): | 1,516 | ) 1,149 |
| Onzième normale (vitesse culminante): | 1,687 | ) 1,113 |

On appréciera, d'une part, que le saut de 1,686* s'intègre parfaitement dans l'échelonnement préexistant et, d'autre part que l'amplitude de couple et de vitesse de la transmission se trouve portée à 17,47 en marche avant et à 20,07 en marche arrière, ce qui a pour effet d'élargir encore considérablement son champ d'application, rendant dans la plupart des cas totalement inutile l'usage de convertisseurs hydrauliques de couple ou de dispositifs amplificateurs complémentaires, tels que relais ou ponts arrière à double démultiplication par exemple.

On appréciera également que le passage du mode extra-lent au mode lent ou vice versa s'effectue avantageusement d'une manière remarquable avec des séquences simples de commande, comme aux figures 1 à 4.

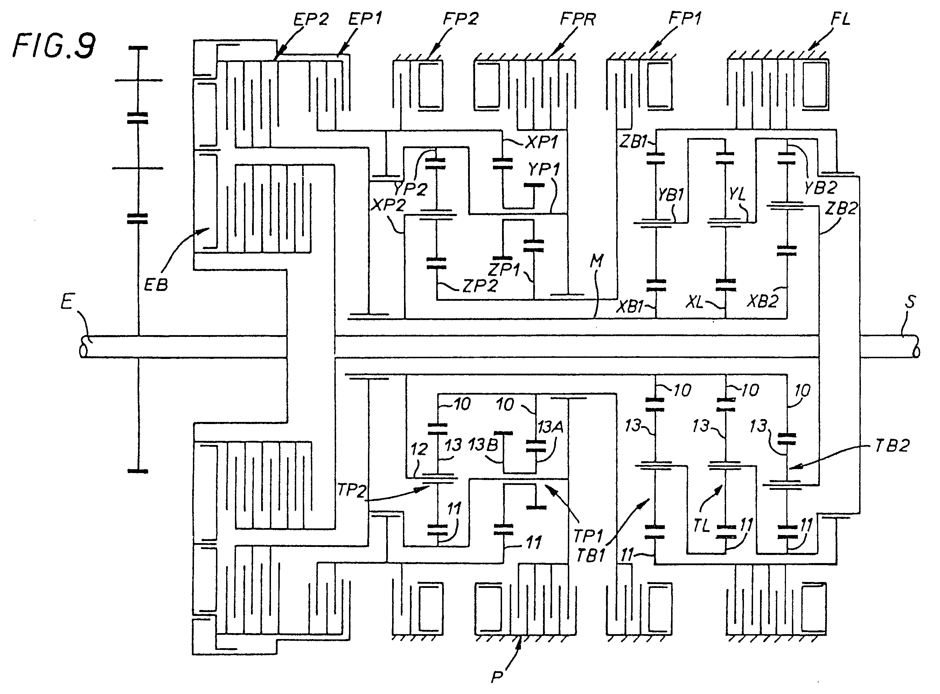

Dans une autre variante (figure 8), la disposition est analogue à celle qui est représentée à la figure 6, mais le rapport entre les modes lent et extra-lent est choisi de préférence intermédiaire entre les sauts 2ème/3ème et 3ème/4ème pré-existants. Avantageusement les rapports de 1ère, de 2ème et de sous-4ème sont délaissés et la transmission est exploitée selon une gamme à douze vitesses avant et deux vitesses arrière également parfaitement échelonnées.

A la figure 8, XL est jumelé avec ZB1 et YL est jumelé avec YB1 et YB2. Z1 forme toujours le cinquième élément L5 coopérant à volonté avec le frein FL.

A la figure 8, comme à la figure 6, le passage du mode extra-lent au mode lent ou vice-versa s'effectue avantageusement d'une manière remarquable avec des séquences simples de commande.

En variante, pour certaines fabrications il peut être intéressant de remplacer le train étagé TB1 de la boîte par deux trains simples.

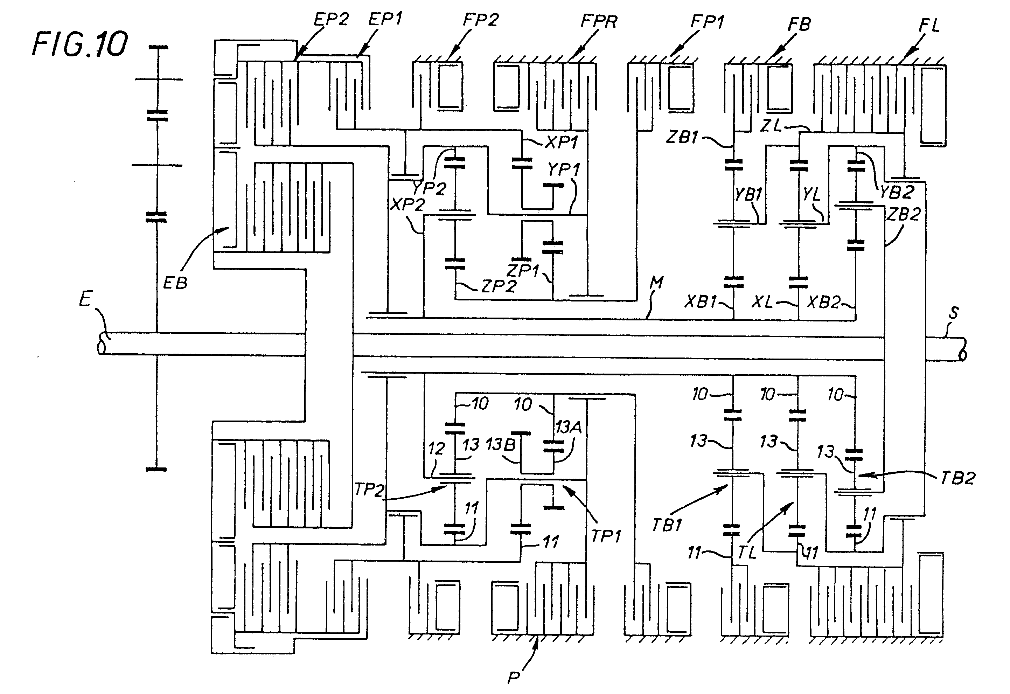

Les figures 9 et 10 représentent cette variante respectivement pour les dispositions des figures 3 (11 vitesses avant, 1 vitesse arrière) et 7 (12 vitesses avant, 2 vitesses arrière). Les moyens de commande de boîte et de pré-boîte, freins et embrayages ainsi que la structure de la pignonnerie de pré-boîte restent inchangés.

On constate figure 9 que lorsque l'on applique cette modification à la boîte de la figure 3 l'un des trains simples de remplacement est semblable au train de démultiplication précédemment utilisé TL. La boîte se compose alors de trois trains simples TB1, TL, TB2 associés en cascades.

Lorsque l'on fait de même à partir de la transmission de la figure 7, on observe que partant des trains TB1, TL de cette figure in peut obtenir deux nouveaux trains simples TB1, TL. La boîte se compose encore de trois trains simples TB1, TL, TB2 associés en cascade.

On remarque que les structures de pignonnerie des représentations des figures 9 et 10 sont identiques. Un dessin unifié de boîte permet ainsi de réaliser à volonté une boîte à 11 vitesses avant et une vitesse arrière, ou à 12 vitesses avant et 2 vitesses arrière, simplement en omettant ou en disposant un frein FL.

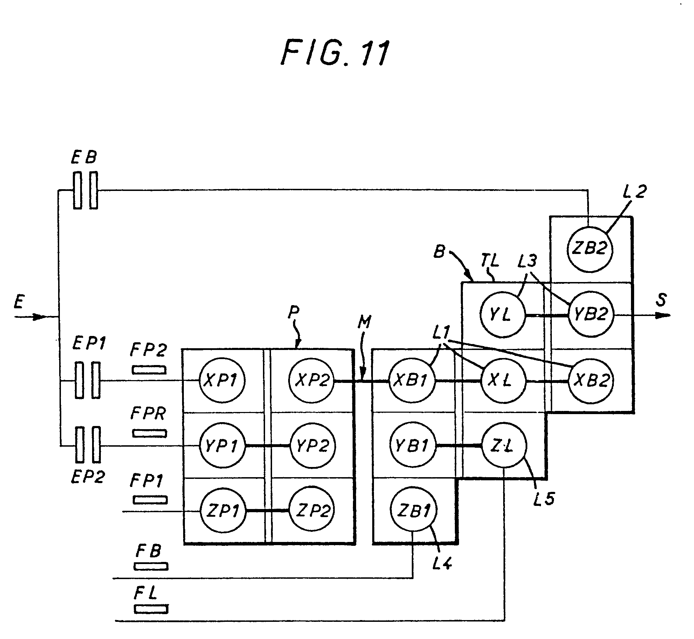

La représentation de la figure 11, représente le couplage des trains et des moyens de commande, avec la même symbolisation qu'aux figures 1, 6 et 8, dans la disposition de la figure 10. On remarquera que la figure 11 se rapporterait à la disposition selon la figure 9, en omettant le frein FL.

**Revendications**

1. Transmission, notamment pour véhicule automobile, comportant une pré-boîte de vitesses (P) et une boîte de vitesses (B) disposées entre un arbre d'entrée de mouvement (E) et un arbre de sortie de mouvement (S) et interconnectées par un arbre intermédiaire (M), la pré-boîte de vitesse (P) présentant un point mort libre où l'arbre intermédiaire (M) est déconnecté de l'arbre d'entrée de mouvement (E) et est libre, et une suite de rapports de marche avant où l'arbre intermédiaire (M) est accouplé à l'arbre d'entrée de mouvement (E) avec un rapport variable de marche avant, des moyens de commande de pré-boîte par lesquels la pré-boîte de vitesses (P) est sélectivement mise au point mort libre ou en marche avant avec un rapport choisi dans ladite suite de rapports, la boîte de vitesses (B) comportant un ensemble planétaire double (TB1, TB2) à quatre éléments (L1, L2, L3, L4) dont un premier élément (L1) accouplé à l'arbre intermédiaire (M), un deuxième élément (L2), un embrayage (EB) par lequel le deuxième élément (L2) est sélectivement accouplé à l'arbre d'entrée de mouvement (E) ou libre, un troisième élément (L3) accouplé à l'arbre de sortie de mouvement (S), un quatrième élément (L4), et un frein (FB) par lequel le quatrième élément (L4) est sélectivement immobilisé ou libre, ladite boîte de vitesses (B) présentant trois conditions de marche avant dites respectivement lente, médiane et rapide, en sorte que: pour la condition lente le deuxième élément (L2) est libre et le quatrième élément (L4) est immobilisé; pour la condition médiane le deuxième élément (L2) est relié à l'arbre d'entrée de mouvement (E) et le quatrième élément (L4) est immobilisé; et pour la condition rapide, le deuxième élément (L2) est relié à l'arbre d'entrée de mouvement (E) et le quatrième élément (L4) est libre, la transmission (P, B) présentant trois modes de fonctionnement de marche avant: un mode lent dans lequel la pré-boîte de vitesses (P) est en marche avant et la boîte de vitesses (B) est en condition lente, un mode médian dans lequel la pré-boîte de vitesses (P) est au point mort libre et la boîte de vitesses (B) est en condition médiane, et un mode rapide dans lequel la pré-boîte de vitesses (P) est en marche avant et la boîte de vitesses (B) est en condition rapide, une variation du rapport dans la suite de rapports de marche avant de la pré-boîte de vitesses (P) ayant pour effet de faire varier dans le même sens le rapport du mode lent de la transmission (P, B) et en sens inverse le rapport du mode rapide de la transmission (P, B), transmission caractérisée en ce que la pré-boîte de vitesses (P) présente une marche arrière qui est obtenue sélectivement par les moyens de commande de pré-boîte (EP1, EP2, FP1, FP2, FPR) et qui donne à la transmission, d'une part, une marche arrière (AR) lorsque la boîte de vitesses (B) est en condition lente et, d'autre part, un rapport culminant de marche avant (11e) lorsque la boîte de vitesses (B) est en condition rapide.

2. Transmission suivant la revendication 1, caractérisé en ce que la pré-boîte de vitesses (P) présente un point mort freiné qui est obtenu sélectivement par lesdits moyens de commande de pré-boîte (EP1, EP2, FP1, FP2, FPR) et dans lesquels l'arbre intermédiaire (M) est déconnecté de l'arbre d'entrée de mouvement (E) et est immobilisé, ce qui donne à la transmission, d'une part, un point mort freiné (PMF) lorsque la boîte de vitesses est en condition lente et, d'autre part, un rapport subculminant de marche avant (10ème) lorsque la boîte de vitesses est en condition rapide.

3. Transmission suivant la revendication 1 ou la revendication 2, caractérisé en ce que l'ensemble planétaire double de la boîte de vitesses (B) comporte un premier et un deuxième trains planétaires simples de boîte (TB1, TB2) ayant chacun trois organes (X, Y, Z): un planétaire (10), une couronne (11) et un porte-satellites (12) dont les satellites (13) engrènent tant avec le planétaire (10) qu'avec la couronne (11), le premier élément (L1) de la boîte de vitesses (B) étant formé par le planétaire (XB1) du premier train de boîte (TB1), et le planétaire (XB2) du deuxième train de boîte (TB2) jumelés (XB1-XB2) et accouplés à l'arbre intermédiaire (M), le deuxième élément (L2) de la boîte de vitesses (B) étant formé par le porte-satellites (ZB2) du deuxième train de boîte (TB2) et coopérant avec ledit embrayage (EB), le troisième élément (L3) de la boîte de vitesses (B) étant formé par le porte-satellites (YB1) du premier train de boîte (TB1) et la couronne (YB2) du deuxième train de boîte (TB2) jumelés (YB1-YB2) et accouplés à l'arbre de sortie de mouvement (S), le quatrième élément (L4) de la boîte de vitesses (B) étant formé par la couronne (ZB1) du premier train de boîte (TB1) et coopérant avec ledit frein (FB).

4. Transmission suivant l'une quelconque des revendications 1 à 3, caractérisée en ce que la pré-boîte (P) présente une suite de rapports de marche avant et un rapport arrière et comporte un premier et un deuxième trains planétaires simples (TP1, TP2) ayant chacun trois organes (X, Y, Z) dont un planétaire (10), une couronne (11), et un porte-satellites (12) dont les satellites (13) engrènent tant avec le planétaire (10) qu'avec la couronne (11), un premier organe (XP1) du premier train de pré-boîte (TP1) étant seul et admis par lesdits moyens de commande de pré-boîte (EP1, EP2, FP1, FP2, FPR) à être sélectivement embrayé avec l'arbre d'entrée de mouvement (E), ou immobilisé, ou libre, un premier organe (XP2) du deuxième train de pré-boîte (TP2) étant accouplé avec l'arbre intermédiaire (M), les deux deuxièmes organes (YP1, YP2) des deux trains de pré-boîte (TP1, TP2) étant jumelés et admis par lesdits moyens de commande de pré-boîte (EP1, EP2, FP1, FP2, FPR) à être sélectivement embrayés avec l'arbre d'entrée de mouvement (E), ou immobilisés, ou libres, tandis que les deux troisièmes organes (ZP1, ZP2) des deux trains de pré-boîte (TP1, TP2) sont jumelés et admis par lesdits moyens de commande de pré-boîte (EP1, EP2, FP1, FP2, FPR) à être sélectivement immobilisés, ou libres (figure 1).

5. Transmission suivant la revendication 4, caractérisée en ce que le premier organe (XP1) du premier train de pré-boîte (TP1) est une couronne (11), le premier organe (XP2) du deuxième train de pré-boîte (TP2) est un porte-satellites (12), le deuxième organe (YP1) du premier train de pré-boîte (TP1) est un porte-satellites (12), le deuxième organe (YP2) du deuxième train de pré-boîte (TP2) est une couronne (11), le troisième organe (ZP1) du premier train de pré-boîte (TP1) est un planétaire (10) et le troisième organe (ZP2) du deuxième train de pré-boîte (TP2) est un planétaire (10) (figure 3).

6. Transmission suivant la revendication 5, caractérisée en ce que les trains planétaires simples de la pré-boîte (P) et de la boîte (B) sont tous les quatre placés les uns à côté des autres dans l'ordre: deuxième train de pré-boîte (TP2), premier train de pré-boîte (TP1), premier train de boîte (TB1) et deuxième train de boîte (TB2) (figure 3).

7. Transmission suivant la revendication 4, caractérisé en ce que le premier organe (XP1) du premier train de pré-boîte (TP1) est un planétaire (10), le premier organe (XP2) du deuxième train de pré-boîte (TP2) est un porte-satellites (12), le deuxième organe (YP1) du premier train de pré-boîte (TP1) est un porte-satellites (12), le deuxième organe (YP2) du deuxième train de pré-boîte (TP1) est une couronne (11), le troisième organe (ZP1) du premier train de pré-boîte (TP1) est une couronne (11) et le troisième organe (ZP2) du deuxième train de pré-boîte (TP2) est un planétaire (10) (figure 5).

8. Transmission suivant la revendication 7, caractérisée en ce que les trains planétaires simples de la pré-boîte (P) et de la boîte (B) sont tous les quatre placés les uns à côté des autres dans l'ordre: premier train de pré-boîte (TP1), deuxième train de pré-boîte (TP2), premier train de boîte (TB1) et deuxième train de boîte (TB2) (figure 5).

9. Transmission suivant l'une quelconque des revendications 1 à 8, caractérisée en ce que des moyens de démultiplication planétaires (TL) sont associés à l'ensemble planétaire double (TB1, TB2) de la boîte de vitesses (B) pour donner à celle-ci une condition supplémentaire dite-extra-lente démultipliée par rapport à la condition lente (figures 6 à 11).

10. Transmission suivant l'une quelconque des revendications 1 à 9, caractérisée en ce que les moyens de démultiplication planétaires (TL) sont intercalés dans l'ensemble planétaire double (TB1, TB2) de la boîte de vitesses (B) (figures 9-11).

11. Transmission suivant l'une quelconque des revendications 1 à 10, caractérisée en ce que la boîte de vitesse (B) est formée d'un ensemble triple de trains simples en cascade TB1, TL, TB2 (figures 9-11).

12. Transmission suivant la revendication 9 ou la revendication 10, caractérisée en ce que, dans un mode extra-lent démultiplié par rapport au mode lent, la pré-boîte de vitesses (P) est en marche avant et la boîte de vitesses (B) en condition extra-lente.

13. Transmission suivant une quelconque des revendications 9 à 12, caractérisée en ce que, dans un deuxième rapport de marche arrière, la pré-boîte de vitesses (P) est en marche arrière, et la boîte de vitesses (B) en condition extra-lente.

14. Transmission suivant l'une quelconque des revendications précédentes, caractérisée en ce que l'arbre d'entrée de mouvement (E), la pré-boîte de vitesses (P), l'arbre intermédiaire (M), la boîte de vitesses (B) et l'arbre de sortie de mouvement (S) sont coaxiaux.

15. Transmission suivant une quelconque des revendications précédentes, caractérisée en ce que l'un des rapports du mode rapide est une prise directe.


**Patentansprüche**

1. Getriebe, insbesondere für Kraftfahrzeuge, mit zwischen einer Eintrittswelle (E) und einer Austrittswelle (S) angeordneten und durch eine Zwischenwelle (M) miteinander verbundenem Vorgetriebe (P) und Hauptgetriebe (B), wobei das Vorgetriebe (P) einen freien Leerlauf, bei dem die Zwischenwelle (M) von der Eintrittswelle (E) getrennt und frei ist und eine Reihe von Vorwärtsgängen aufweist, bei denen die Zwischenwelle (M) durch einen variablen Vorwärtsgang an die Eintrittswelle (M) angekuppelt ist, mit Steuermitteln für das Vorgetriebe (P), durch die das Vorgetriebe (P) wahlweise in den freien Leerlauf oder durch einen in der Folge der Vorwärtsgänge gewählten Gang in Vorwärtsfahrt schaltbar ist, wobei das Hauptgetriebe (B) eine doppelte Planetengetriebe-Anordnung (TB1, TB2) mit vier Elementen (L1, L2, L3, L4) aufweist, in der ein erstes Element (11) an die Zwischenwelle angekoppelt ist, ein zweites Element (L2) mit einer Kupplung (EB) zusammenwirkt, mittels der dieses (L2) wahlweise an die Eintrittswelle (E) ankuppelbar oder in Leerlauf gelegt werden kann, ein drittes Element (L3) an die Austrittswelle (S) angekuppelt ist, und ein viertes Element (L4) mit einer Bremse (FB) zusammenwirkt, durch die dieses vierte Element (L4) wahlweise festgestellt oder freigesetzt werden kann, und wobei das Hauptgetriebe (B) drei Vorwärtsschaltzustände aufweist, nämlich «langsam», «mittel» und «schnell», der Art, dass für den Zustand «langsam» das zweite Element (L2) frei und das vierte Element (L4) fest, für den Zustand «mittel» das zweite Element (L2) mit der Eintrittswelle (E) gekoppelt und das vierte Element (L4) fest und für den Zustand «schnell» das zweite Element (L2) mit der Eintrittswelle (E) verbunden und das vierte Element (L4) frei sind, und das Getriebe (P, B) drei Fahr-Betriebsarten aufweist, nämlich eine Betriebsart «langsam», in der das Vorgetriebe (P) in Vorwärtsgang und das Hauptgetriebe (B) in den Zustand «langsam», eine Betriebsart «mittel», in der das Vorgetriebe (P) in den Leerlauf und das Hauptgetriebe (B) in den Zustand «mittel», und eine Betriebsart «schnell», in der das Vorgetriebe (P) in Vorwärtsgang und das Hauptgetriebe (B) in den Zustand «schnell» geschaltet sind, wobei eine Veränderung des Übersetzungsverhältnisses in der Reihe der Vorwärtsgänge des Vorgetriebes (P) das Übersetzungsverhältnis des Getriebes (P, B) in der Betriebsart «langsam» im gleichen Sinne und in der Betriebsart «schnell» im umgekehrten Sinne ändert, dadurch gekennzeichnet, dass das Vorgetriebe (P) einen Rückwärtsgang aufweist, der wahlweise durch die Steuermittel des Vorgetriebes (EP1, EP2, FP1, FP2, FPR) eingelegt werden kann und der das Getriebe zum einen auf Rückwärtsfahrt (AR) stellt, wenn sich das Hauptgetriebe (B) im Zustand «langsam» befindet, und zum anderen einen höchsten Vorwärtsgang (11E) darstellt, wenn das Hauptgetriebe (B) sich im Zustand «schnell» befindet.

2. Getriebe nach Anspruch 1, dadurch gekennzeichnet, dass das Vorgetriebe (P) einen wahlweise durch die genannten Steuermittel des Vorgetriebes (EP1, EP2, FP1, FP2, FPR) erhaltbaren gebremsten Leerlauf aufweist, in welchem die Zwischenwelle (M) von der Eintrittswelle (E) getrennt und festgestellt ist, wodurch das Getriebe zum einen einen gebremsten Leerlauf (PMF), während das Hauptgetriebe sich im Zustand «langsam» befindet und zum anderen einen subkulminanten oder reduzierten höchsten Vorwärtsgang (10ème) erhält, während sich das Hauptgetriebe (B) im Betriebszustand «schnell» befindet.

3. Getriebe nach Anspruch 1 oder 2, dadurch gekennzeichnet, dass die doppelte Planetengetriebeanordnung des Hauptgetriebes (B) einen ersten und einen zweiten einfachen Planetengetriebezug (TB1, TB2) mit jeweils drei Organen (Y, X, Z) aufweist: ein Zentralrad (10), einen Zahnkranz (11) und einen Planetenträger (12), dessen Planeten (13) sowohl mit dem Zentralrad (10) als auch mit dem Zahnkranz (11) kämmen, und wobei das erste Element (L1) des Hauptgetriebes (B) durch Zusammenkoppeln des Zentralrads (XB1) des ersten Getriebezugs (TB1) und des Zentralrads (XB2) des zweiten Getriebezugs (TB2) gebildet und an die Zwischenwelle (M) angekoppelt ist, das zweite Element (L2) des Hauptgetriebes (B) von dem Planetenträger (ZB2) des zweiten Getriebezugs (TB2) gebildet wird und mit der Kupplung (EB) zusammenwirkt, das dritte Element (L3) des Hauptgetriebes von dem Planetenträger (YB1) des ersten Getriebezugs (TB1) gekoppelt mit dem Zahnkranz (XB2) des zweiten Getriebezugs (TB2) gebildet (YB1-YB2) und an die Austrittswelle (S) angekoppelt ist, und das vierte Element (L4) des Hauptgetriebes (B) von dem Zahnkranz (ZB1) des ersten Getriebezugs (TB1) des Hauptgetriebes gebildet wird und mit der Bremse (FB) zusammenarbeitet.

4. Getriebe nach mindestens einem der Ansprüche 1 bis 3, dadurch gekennzeichnet, dass das Vorgetriebe (P) eine Reihe von Vorwärtsgängen und einen Rückwärtsgang aufweist sowie einen ersten und einen zweiten einfachen Getriebezug (TP1, TP2) mit jeweils drei Organen (X, Y, Z): mit einem Zentralrad (10) einem Zahnkranz (11) und einem Planetenträger (12), dessen Planeten (13) sowohl mit dem Zentralrad (10) als auch mit dem Zahnkranz (11) kämmen, wobei ein erstes Organ (XP1) des ersten Getriebezugs des Vorgetriebes (TP1) selbständig ist und über die Steuermittel des Vorgetriebes (EP1, EP2, FP1, FP2, FPR) wahlweise mit der Eintrittswelle (E) koppelbar ist, oder festgestellt oder freigesetzt werden kann und ein erstes Organ (XP2) des zweiten Getriebezugs des Vorgetriebes (TP2) an die Zwischenwelle (M) angekoppelt ist, die zweiten Organe (YP1, YP2) der beiden Getriebezüge des Vorgetriebes (TP1, TP2) zusammengekoppelt und wahlweise durch die Steuermittel des Vorgetriebes (EP1, EP2, FP1, FP2, FPR) wahlweise an die Eintrittswelle (E) ankoppelbar oder feststellbar oder freisetzbar sind, während die beiden dritten Organe (ZP1, ZP2) der zweiten Getriebezüge des Vorgetriebes (TP1, TP2) miteinander verbunden und durch die Steuermittel des Vorgetriebes (EP1, EP2, FP1, FP2, FPR) wahlweise festgelegt oder freigesetzt werden können. (Fig. 1).

5. Getriebe nach Anspruch 4, dadurch gekennzeichnet, dass das erste Organ (XP1) des ersten Getriebezugs des Vorgetriebes (TP1) ein Zahnkranz (11), das erste Organ (XP2) des zweiten Getriebezugs des Vorgetriebes (TP2) ein Planetenträger (12), das zweite Organ (YP1) des ersten Getriebezuges des Vorgetriebes (TP1) ein Planetenträger (12), das zweite Organ (YP2) des zweiten Getriebezugs des Vorgetriebes (TP2) ein Zahnkranz (11), das dritte Organ (ZP1) des ersten Getriebezugs des Vorgetriebes (Tp1) ein Zentralrad (10) und das dritte Organ (ZP2) des zweiten Getriebezugs des Vorgetriebes (TP2) ein Zentralrad (10) sind. (Fig. 3).

6. Getriebe nach Anspruch 5, dadurch gekennzeichnet, dass die einfachen Planetengetriebezüge des Vorgetriebes (P) und des Hauptgetriebes (B) alle vier nebeneinander in der folgenden Reihe angeordnet sind: Zweiter Getriebebezug des Vorgetriebes (TP2), erster Getriebezug des Vorgetriebes (TP1), erster Getriebezug des Hauptgetriebes (TB1) und zweiter Getriebezug des Hauptgetriebes (TB2). (Fig. 3).

7. Getriebe nach Anspruch 4, dadurch gekennzeichnet, dass das erste Organ (XP1) des ersten Getriebezugs des Vorgetriebes (TP1) ein Zentralrad (10), das erste Organ (XP2) des zweiten Getriebezugs des Vorgetriebes (TP2) ein Planetenträger (12), das zweite Organ (YP1) des ersten Getriebezugs des Vorgetriebes (TP1) ein Planetenträger (12), das zweite Organ (YP2) des zweiten Getriebezugs des Vorgetriebes (TP1) ein Zahnkranz (11), das dritte Organ (ZP1) des ersten Getriebezugs des Vorgetriebes (TP1) ein Zahnkranz (11) und das dritte Organ (ZP2) des zweiten Getriebezugs des Vorgetriebes (TP2) ein Zentralrad (10) ist. (Fig. 5).

8. Getriebe nach Anspruch 7, dadurch gekennzeichnet, dass die einfachen Planetengetriebezüge des Vorgetriebes (P) und des Hauptgetriebes (B) alle vier nebeneinander in der folgenden Reihe angeordnet sind: Erster Getriebezug des Vorgetriebes (TP1), zweiter Getriebezug des Vorgetriebes (TP2), erster Getriebezug des Hauptgetriebes (TB1) und zweiter Getriebezug des Hauptgetriebes (TB2) (Fig. 5).

9. Getriebe nach mindestens einem der Ansprüche 1 bis 8, dadurch gekennzeichnet, dass der doppelten Planetenanordnung (TB1, TB2) des Hauptgetriebes Planetenuntersetzungsmittel (TL) zugeordnet sind, um dieses in einen zusätzlichen Zustand «extra langsam» setzen zu können, der bezüglich des Gangs für den Zustand «langsam» untersetzt ist (Fig. 6 bis 11).

10. Getriebe nach mindestens einem der Ansprüche 1 bis 4, dadurch gekennzeichnet, dass die Planetenuntersetzungsmittel (TL) in die doppelte Planetenanordnung (TB1, TB2) des Hauptgetriebes (B) eingebaut sind.

11. Getriebe nach mindestens einem der Ansprüche 1 bis 10, dadurch gekennzeichnet, dass das Hauptgetriebe (B) aus einer kaskadenförmigen Dreifachanordnung TB1, TL, TB2 der einfachen Getriebezüge gebildet sind.

12. Getriebe nach Anspruch 9 oder 10, dadurch gekennzeichnet, dass sich in der bezüglich des Zustands «langsam» untersetzten Stellung «extra langsam» das Vorgetriebe (P) im Vorwärtsgang und das Hauptgetriebe (B) im Zustand «extra langsam» befinden.

13. Getriebe nach mindestens einem der Ansprüche 9 bis 12, dadurch gekennzeichnet, dass sich in einem zweiten Rückwärtsgang das Vorgetriebe (P) im Zustand «rückwärts» und das Hauptgetriebe (B) im Zustand «extra langsam» befinden.

14. Getriebe nach mindestens einem der vorangegangenen Ansprüche, dadurch gekennzeichnet, dass die Eintrittswelle (E), das Vorgetriebe (P), die Zwischenwelle (M), das Hauptgetriebe (B) und die Ausgangswelle (S) koaxial angeordnet sind.

15. Getriebe nach mindestens einem der vorangegangenen Ansprüche, dadurch gekennzeichnet, dass einer der Vorwärtsgänge für den Zustand «schnell» im direkten Eingriff steht.

**Claims**

1. A transmission, in particular for a motor vehicle, comprising a pre-gearbox (P) and a gearbox (B) disposed between a motion input shaft (E) and a motion output shaft (S) and interconnected by an intermediate shaft (M), the pre-gearbox (P) having a free neutral point where the intermediate shaft (M) is disconnected from the motion input shaft (E) and is free, and a series of forward movement ratios in which the intermediate shaft (M) is coupled to the motion input shaft (E) with a variable forward movement ratio, pre-gearbox control means by which the pre-gearbox (P) is selectively set to the free neutral point or in forward movement with a ratio selected from said series of ratios, the gearbox (B) comprising a double planetary assembly (TB1, TB2) having four elements (L1, L2, L3, L4) comprising a first element (L1) coupled to the intermediate shaft (M), a second element (L2), a clutch (EB) by which the second element (L2) is selectively coupled to the motion input shaft (E) or is free, a third element (L3) coupled to the motion output shaft (S), a fourth element (L4), and a brake (FB) by which the fourth element (L4) is selectively immobilised or free, said gearbox (B) having three forward movement conditions which are referred to respectively as slow, medium and fast, such that: for the slow condition the second element (L2) is free and the fourth element (L4) is immobilised; for the medium condition the second element (L2) is connected to the motion input shaft (E) and the fourth element (L4) is immobilised; and for the fast condition the second element (L2) is connected to the motion input shaft (E) and the fourth element (L4) is free, the transmission (P, B) having three forward movement operating modes: a slow mode in which the pre-gearbox (P) is in forward movement and the gearbox (B) is in the slow condition, a medium mode in which the pre-gearbox (P) is at the free neutral point and the gearbox (B) is in the medium condition, and a fast mode in which the pre-gearbox (P) is in forward movement and the gearbox (B) is in the fast condition, a variation in the ratio in the series of forward movement ratios of the pre-gearbox (P) having the effect of varying in the same direction the ratio of the slow mode of the transmission (P, B) and in the opposite direction the ratio of the fast mode of the transmission (P, B), the transmission being characterised in that the pre-gearbox (P) has a reserve movement which is obtained selectively by the pre-gearbox control means (EP1, EP2, FP1, FP2, FPR) and which gives the transmission on the one hand a reverse movement (AR) when the gearbox (B) is in the slow condition and on the other hand a culminating forward movement ratio (11th) when the gearbox (B) is in the fast condition.

2. A transmission according to claim 1, characterised in that the pre-gearbox (P) has a braked neutral point which is obtained selectively by said pre-gearbox (P) control means (EP1, EP2, FP1, FP2, FPR) and in which the intermediate shaft (M) is disconnected from the motion input shaft (E) and is immobilised, which gives the transmission on the one hand a braked neutral point (PMF) when the gearbox is in the slow condition and on the other hand a subculminating forward movement ratio (10th) when the gearbox is in the fast condition.

3. A transmission according to claim 1 or claim 2, characterised in that the double planetary assembly of the gearbox (B) comprise first and second simple gearbox planetary trains (TB1, TB2) each having three members (X, Y, Z): a sun gear (10), an annulus gear (11) and a planet gear carrier (12) whose planet gears (13) mesh both with the sun gear (10) and with the annulus gear (11), the first element (L1) of the gearbox (B) being formed by the sun gear (XB1) of the first box train (TB1) and the sun gear (XB2) of the second box train (TB2) which are twinned (XB1-XB2) and coupled to the intermediate shaft (M), the second element (L2) of the gearbox (B) being formed by the planet gear carrier (ZB2) of the second box train (TB2) and co-operating with said clutch (EB), the third element (L3) of the gearbox (B) being formed by the planet gear carrier (YB1) of the first box train (TB1) and the annulus gear (YB2) of the second box train (TB2) which are twinned (XB1-YB2) and coupled to the motion output shaft (S), the fourth element (L4) of the gearbox (B) being formed by the annulus gear (ZB1) of the first box train (TB1) and co-operating with said brake (FB).

4. A transmission according to any one of claims 1 to 3, characterised in that the pre-gearbox (P) has a series of forward movement ratios and a reverse ratio and comprises first and second simple planetary trains (TP1, TP2) each having three members (X, Y, Z) comprising a sun gear (10), an annulus gear (11) and a planet gear carrier (12) whose planet gears (13) mesh both with the sun gear (10) and with the annulus gear (11), a first member (XP1) of the first pre-gearbox train (TP1) being alone and admitted by said pre-gearbox (P) control means (EP1, EP2, FP1, FP2, FPR) to be selectively connected to the motion input shaft (E), or immobilised, or free, a first member (XP2) of the second pre-gearbox train (TP2) being coupled to the intermediate shaft (M), the two second members (YP1, YP2) of the two pre-gearbox trains (TP1, TP2) being twinned and admitted by said pre-gearbox control means (EP1, EP2, FP1, FP2, FPR) to be selectively coupled to the motion input shaft (E), or immobilised, or free, while the two third members (ZP1, ZP2) of the two pre-gearbox trains (TP1, TP2) are twinned and admitted by said pre-gearbox control means (EP1, EP2, FP1, FP2, FPR) to be selectively immobilised, or free (Figure 1).

5. A transmission according to claim 4, characterised in that the first member (XP1) of the first pre-gearbox train (TP1) is an annulus gear (11), the first member (XP2) of the second pre-gearbox train (TP2) is a planet gear carrier (12), the second member (YP1) of the first pre-gearbox train (TP1) is a planet gear carrier (12), the second member (YP2) of the second pre-gearbox train (TP2) is an annulus gear (11), the third member (ZP1) of the first pre-gearbox train (TP1) is a sun gear (10) and the third member (ZP2) of the second pre-gearbox train (TP2) is a sun gear (10) (Figure 3).

6. A transmission according to claim 5. characterised in that the simple planetary trains of the pre-gearbox (P) and the gearbox (B) are all four placed one beside the others in the following order: second pre-gearbox train (TP2), first pre-gearbox train (TP1), first gearbox train (TB1) and second gearbox train (TB2) (Figure 3).

7. A transmission according to claim 4, characterised in that the first member (XP1) of the first pre-gearbox train (TP1) is a sun gear (10), the first member (XP2) of the second pre-gearbox train (TP2) is a planet gear carrier (12), the second member (YP1) of the first pre-gearbox train (TP1) is a planet gear carrier (12), the second member (YP2) of the second pre-gearbox train (TP1) is an annulus gear (11), the third member (ZP1) of the first pre-gearbox train (TP1) is an annulus gear (11) and the third member (ZP2) of the second pre-gearbox train (TP2) is a sun gear (10) (Figure 5).

8. A transmission according to claim 7, characterised in that the simple planetary trains of the pre-gearbox (P) and the gearbox (B) are all four placed one beside the others in the following order: first pre-gearbox train (TP1), second pre-gearbox train (TP2), first gearbox train (TB1) and second pre-gearbox train (TB2) (Figure 5).

9. A transmission according ot any one of claims 1 to 8, characterised in that the planetary step-down means (TL) are associated with the double planetary assembly (TB1, TB2) of the gearbox (B) to give same an additional condition which is referred to as extra-slow and which is stepped-down in relation to the slow condition (Figures 6 to 11).

10. A transmission according ot any one of claims 1 to 9, characterised in that the planetary step-down means (TL) are inserted into the double planetary assembly (TB1, TB2) of the gearbox (B) (Figures 9 to 11).

11. A transmission according to any one of claims 1 to 10, characterised in that the gearbox (B) is formed by a triple assembly of simple trains (TB1, TL, TB2) in cascade relationship (Figures 9 to 11).

12. A transmission according to claim 9 or claim 10, characterised in that in an extra-slow mode which is stepped down in relation to the slow mode, the pre-gearbox (P) is in the forward movement condition and the gearbox (B) is in the extra-slow condition.

13. A transmission according to any one of claims 9 to 12, characterised in that, in a second reverse movement ratio, the pre-gearbox (P) is in the reverse movement condition and the gearbox (B) is in the extra-slow condition.

14. A transmission according to any one of the preceding claims, characterised in that the motion input shaft (E), the pre-gearbox (P), the intermediate shaft (M), the gearbox (B) and the motion output shaft (S) are koaxial.

15. A transmission according to any one of the preceding claims, characterised in that one of the ratios of the mode is a direct connection.

FIG.1

FIG.2

0 167 456

FIG.3

FIG.4

FIG.5

# FIG.6

# FIG.8

FIG.7

0 167 456

23

FIG.9

FIG.10

# FIG. 11